# FASCICULE DE BREVET EUROPEEN

(11) **EP 2 715 100 B1**
(45) Date de publication et mention de la délivrance du brevet: **08.04.2015**
(21) Numéro de dépôt: 12728699.5
(22) Date de dépôt: 15.05.2012
(51) Int. Cl.: F02K 9/97

(54) **SYSTÈME DE RÉDUCTION DE LA DYNAMIQUE DU SEGMENT MOBILE D'UNE TUYÈRE DÉPLOYABLE POUR MOTEUR DE FUSÉE**
SYSTEM ZUR REDUZIERUNG DER DYNAMIK DES MOBILEN ABSCHNITTS EINER ENTFALTBAREN RAKETENMOTORDÜSE
SYSTEM FOR REDUCING THE DYNAMICS OF THE MOBILE SEGMENT OF A DEPLOYABLE ROCKET MOTOR NOZZLE

(30) Priorité: 23.05.2011 FR 1154454
(43) Date de publication de la demande: 09.04.2014
(73) Titulaire: SNECMA, 75015 Paris (FR)
(72) Inventeur: DAVID, Noël, F-27640 Breuilpont (FR); PYRE, Alain, F-27950 Saint Just (FR)
(74) Mandataire: Milien, Jean-Baptiste Aurélien
(86) Numéro de dépôt international: PCT/FR2012/051091
(87) Numéro de publication internationale: WO 2012/160297

(56) Documents cités:
- EP-A1- 0 626 513
- FR-A1- 2 757 571
- FR-A1- 2 944 063
- JP-B- 6 056 135
- US-A- 4 383 407

## Description

### DOMAINE DE L'INVENTION

La présente invention concerne une tuyère déployable pour moteur de fusée et plus particulièrement, mais pas uniquement, une tuyère déployable pour un moteur d'étage supérieur d'une fusée, ainsi qu'un moteur de fusée comprenant une telle tuyère. Au sens de l'invention, une tuyère est un conduit d'un moteur de fusée par lequel sont éjectés les gaz de combustion.

### ETAT DE LA TECHNIQUE ANTERIEURE

Une tuyère déployable pour moteur de fusée connue comprend au moins un segment divergent fixe et un segment divergent mobile coaxial au segment divergent fixe et apte à se déplacer le long du segment divergent fixe depuis une position reployée vers une position déployée.

Ce type de tuyère déployable est généralement fabriquée de manière à ce que ses parois sont aussi fines que possible, dans la limite de sa résistance mécanique et thermique, afin de réduire sa masse, et donc d'optimiser la performance du moteur sur lequel elle est montée. Cependant, le segment divergent mobile est particulièrement souple en position reployée de sorte que les vibrations subies peuvent conduire à des charges mécaniques importantes pouvant l'altérer au point de gêner son bon fonctionnement. Par exemple, lorsque la tuyère est reployée entre deux étages d'une fusée, les vibrations subies lors du lancement de la fusée peuvent fissurer voire rompre le segment divergent mobile.

FR 2 757 571 divulgue un divergent déployable pour propulseur.

Un but de la présente invention est de remédier au moins en partie aux inconvénients précités.

### PRESENTATION DE L'INVENTION

L'invention atteint son but en fournissant une tuyère déployable du type précité comprenant en outre un raidisseur transversal précontraint en tension et s'étendant transversalement au segment divergent mobile, au voisinage d'une extrémité aval du segment divergent mobile, entre au moins deux points de la périphérie d'une paroi intérieure du segment divergent mobile.

Les segments divergents fixe et mobile, et plus généralement la tuyère déployable définissent une direction axiale. Le segment divergent mobile se déplace le long de cette direction axiale autour du segment divergent fixe. Le divergent fixe est destiné à être rattaché à un point fixe par rapport au segment divergent mobile. L'amont et l'aval de la tuyère déployable sont définis par rapport au sens de l'écoulement des gaz de combustion au sein de la tuyère. Les segments fixe et mobile étant divergents, la section de leur extrémité amont est respectivement plus petite que la section de leur extrémité aval. On comprend qu'en position reployée (ou position repliée) l'extrémité aval du segment divergent mobile est plus proche de l'extrémité aval du segment divergent fixe que l'extrémité amont du segment divergent mobile. Inversement, en position déployée (ou position étendue) l'extrémité amont du segment divergent mobile est plus proche de l'extrémité aval du segment divergent fixe que l'extrémité aval du segment divergent mobile.

Le « voisinage » de l'extrémité aval du segment divergent mobile est défini comme étant l'environnement du segment divergent mobile qui s'étend axialement sur 10% de l'étendue axiale totale du segment divergent mobile autour de l'extrémité aval ; la partie du segment divergent mobile qui s'étend axialement sur 10% de l'étendue axiale totale du segment divergent mobile depuis l'extrémité aval étend bien entendu incluse. Par la suite, cette partie du segment est appelée « partie d'extrémité aval ». Les termes « voisinage » et « partie d'extrémité » s'appliquent également à l'extrémité amont, ainsi qu'au segment divergent fixe, et plus généralement à la tuyère.

On comprend que le raidisseur s'étend entre deux points intérieurs distincts de la partie d'extrémité aval du segment divergent mobile. En disposant le raidisseur de la sorte, l'encombrement de ce dernier dans l'environnement de la tuyère déployable est réduit, de sorte qu'il ne gêne pas lorsque le divergent est reployé. Ceci est particulièrement avantageux lorsque la tuyère est disposée entre deux étages d'une fusée. En outre, cette disposition du raidisseur permet de s'assurer que le raidisseur ne gêne pas le déploiement de la tuyère. Par ailleurs, toujours grâce à ce positionnement, le raidisseur n'entrave pas l'écoulement des gaz de combustion au sein de la tuyère lorsque le moteur se met ou est en marche.

Le raidisseur étant précontraint en tension, les au moins deux points sont couplés de sorte que leurs déplacements relatifs dus aux vibrations sont limités voire bloqués. Notamment les modes propres en lobe du type ovalisation, trois lobes, quatre lobes, etc. du segment divergent mobile sont bloqués, ou leur amplitude de déformation limité. Par ailleurs le raidisseur est avantageusement plus souple que le segment divergent mobile de sorte que les vibrations propres du raidisseur ne génèrent pas d'effort supplémentaire au voisinage desdits points.

On comprend que plus le raidisseur relie un nombre de points élevé, plus le nombre de modes propres bloqués est élevé. Par exemple, lorsque la tuyère présente une symétrie de révolution autour de la direction axiale, un raidisseur qui s'étend entre douze points uniformément angulairement réparties autour de la direction axiale, bloque les cinq premiers modes propres de vibration (i.e. les modes propres de fréquences les plus basses) du segment divergent mobile.

Ainsi, les premiers modes propres en vibration du segment divergent mobile étant bloqués, les vibrations externes auxquelles il est soumis n'excitent pas ces modes propres. Par conséquent, les phénomènes de résonnance les plus énergétiques, associés aux modes propres de plus basses fréquences qui sont bloqués par le raidisseur, disparaissent. Les phénomènes de résonnances de plus hautes fréquences sont moins énergétiques et ne présentent pas, ou moins, de risque d'altération pour le segment divergent mobile.

Par conséquent, les contraintes mécaniques dues aux vibrations étant moindres dans le segment divergent mobile de la tuyère déployable selon l'invention par rapport au segment divergent mobile des tuyères déployable de l'état de la technique, les parois du segment divergent mobile de la tuyère selon l'invention peuvent être plus fines que les parois du segment divergent mobile de l'état de la technique tout en résistant à un spectre de vibrations équivalent. Cette réduction d'épaisseur permet d'alléger la tuyère selon l'invention par rapport aux tuyères de l'état de la technique et donc d'améliorer la performance du moteur sur lequel elle est montée.

Avantageusement, le raidisseur transversal s'étend dans un plan transversal du segment divergent mobile.

Un plan transversal est un plan perpendiculaire à la direction axiale du segment mobile divergent. Ceci permet un meilleur blocage des premiers modes propres du segment divergent mobile.

Selon une variante, le raidisseur comprend au moins un tirant s'étendant diamétralement et ayant deux extrémités, chaque extrémité étant reliée à un point de la périphérie de la paroi intérieure du segment divergent mobile.

Un tirant qui s'étend diamétralement est un tirant qui relie directement deux points de la périphérie de la paroi intérieure du segment divergent mobile qui sont opposés par rapport à l'axe central du segment divergent mobile, en passant par cet axe, et ce quelle que soit la forme de section transversale du segment divergent mobile. Préférentiellement, la section transversale du segment divergent mobile est circulaire. Le tirant s'étend alors selon un diamètre de la section circulaire. Un tel tirant est plus facile à monter et sa précontrainte en tension est plus facile à ajuster qu'un tirant qui ne s'étend pas diamétralement. Préférentiellement, le raidisseur comprend trois tirants s'étendant diamétralement et ayant chacun deux extrémités, chaque extrémité de chaque tirant étant reliée à un point de la périphérie de la paroi intérieure du segment divergent mobile. Ceci permet d'améliorer le blocage des premiers modes de vibration.

Selon une autre variante, le raidisseur comprend au moins deux tirants s'étendant radialement depuis un corps central primaire.

Un tirant qui s'étend radialement est un tirant qui s'étend depuis le corps central disposé sur l'axe central du segment divergent mobile vers un point de la périphérie intérieure de la paroi intérieure du segment divergent mobile, et ce quelle que soit la forme de section transversale du segment divergent mobile. Ainsi, un tirant radial présente une première extrémité reliée au corps central et une deuxième extrémité reliée à la paroi segment divergent mobile. Préférentiellement, la section transversale du segment divergent mobile est circulaire. Le tirant s'étend alors selon un rayon géométrique de la section circulaire, ou selon une variante, comme les rayons d'une roue de vélo (c'est-à-dire sans être dirigés vers l'axe géométrique central du segment divergent mobile, mais vers la périphérie d'axe central présentant un certain diamètre). On notera que le corps central est dit « primaire » par rapport à un corps central secondaire décrit ultérieurement. Préférentiellement, le raidisseur comprend au moins trois tirants s'étendant radialement depuis un corps central primaire. Ceci permet d'améliorer le blocage des premiers modes de vibration.

Avantageusement, le raidisseur comprend des moyens de réglage de la précontrainte en tension.

Grâce aux moyens de réglage de la précontrainte en tension, il est possible d'appliquer une précontrainte prédéterminée et contrôlée. Les moyens de précontraintes comprennent, par exemple, un tendeur ajustable par un système à pas de vis.

Avantageusement, le raidisseur comprend au moins une corde en fibres polymères.

Une corde en fibres polymères présente une faible masse. Ainsi, la masse ajoutée que représente le raidisseur par rapport à la tuyère est faible comparativement à la masse de la tuyère. Ceci permet de ne pas pénaliser le rendement du moteur auquel la tuyère est fixée. On comprend que la corde sert de tirant. Par ailleurs, une corde présente un faible encombrement de sorte que l'obstruction du raidisseur transversal dans segment divergent mobile est négligeable par rapport à la section du segment divergent mobile et ne perturbe pas le jet de gaz de combustion, notamment lors de l'allumage du moteur auquel est fixée la tuyère déployable. Préférentiellement, chaque tirant comprend une corde en fibres polymères. Avantageusement, le raidisseur comprend au moins trois cordes en fibres polymères.

Préférentiellement, la corde est en fibres d'aramide (ou kevlar - marque déposée) ou équivalent. On entend par équivalent une corde en fibres présentant un coefficient de dilatation thermique, une température de fonte ou de vaporisation, une raideur et une sensibilité au fluage du même ordre de grandeur qu'une corde en fibres d'aramide. Par exemple, la corde peut être également fabriquée en fibres de polyester.

Une corde en fibres d'aramide ou équivalent présente l'avantage de ne pas fluer, c'est-à-dire qui n'est pas sensible au fluage, tout en présentant une raideur en traction satisfaisante. Ainsi, la précontrainte en tension d'une telle corde ne varie pas ou peu, dans le temps. Par ailleurs, cette corde en fibre d'aramide présente un faible coefficient de dilatation thermique. Ainsi, la précontrainte en tension d'une telle corde ne varie pas ou peu, lorsque la corde est soumise à des variations de température, par exemple lorsque la tuyère est montée sur un moteur disposé dans un inter étage cryotechnique.

Par ailleurs, une telle corde fond et se décompose en quelques secondes sous l'effet des gaz chauds de combustion éjectés par le moteur. Ainsi, lorsque la tuyère est déployée et que le moteur auquel elle est fixée fonctionne, la décomposition des cordes du raidisseur permet de ne pas entraver l'éjection des gaz de combustion de la tuyère. En outre, le fait que la corde se désagrège sous l'effet de la chaleur permet d'éviter d'éjecter des parties solides lorsque la tuyère est déployée et que le moteur fonctionne, ce qui évite de risquer de dégrader le moteur lui-même, ou, par exemple, l'étage supérieur auquel il est attaché ou l'étage inférieur qui vient d'être largué.

Avantageusement, le raidisseur comprend des moyens de fixation au segment divergent mobile solidaires dudit segment divergent mobile.

En étant solidaire du segment divergent mobile, les moyens de fixation ne sont pas éjectés de la tuyère, par exemple lorsque la corde fond et se désagrège, de sorte qu'ils ne présentent pas un risque de dégradation par projection vers, par exemple, le moteur, l'étage supérieur ou l'étage inférieur.

Avantageusement, les moyens de fixation ne s'étendent pas à l'intérieur du segment divergent mobile. Ainsi, les moyens de fixation ne perturbent pas l'écoulement des gaz de combustion.

Avantageusement, en position reployée, le raidisseur coopère avec une partie d'extrémité aval du segment divergent fixe.

On comprend que le raidisseur coopère directement ou via une ou plusieurs pièce(s) intermédiaire(s) avec le segment divergent fixe. Ceci permet de bloquer notamment, mais pas uniquement, les modes propres de corps rigide de basculement et de translation radiale du segment divergent mobile autour du segment divergent fixe. Ainsi on réduit encore les vibrations et les risques d'endommagement du segment divergent mobile, et de collision entre le segment divergent mobile et le segment divergent fixe.

Avantageusement, le segment divergent fixe et le segment divergent mobile présentent, au voisinage de leurs extrémités aval, des moyens conjugués de centrage qui coopèrent entre eux en position reployée.

Les moyens conjugués de centrage permettent d'une part de maintenir en position le segment divergent mobile par rapport au segment divergent fixe, et d'autre part de bloquer les mouvements de translation radiale et/ou les mouvements de basculement, notamment les modes propres de corps rigide, du segment divergent mobile par rapport au segment divergent fixe.

Selon un mode de réalisation, le raidisseur porte une jupe annulaire de centrage qui coopère par emboîtement avec une partie d'extrémité aval du segment divergent fixe dans la position reployée.

On comprend que dans ce mode de réalisation les moyens conjugués sont formés d'une part par la jupe annulaire, et d'autre part par la partie d'extrémité aval du segment divergent fixe. Par exemple, la jupe est adaptée pour épouser la partie d'extrémité aval du segment divergent fixe. En position reployée, la précontrainte du raidisseur permet à ce dernier de maintenir l'emboitement de la jupe et de partie d'extrémité aval du segment divergent fixe, ainsi qu'un contact éventuel entre eux.

Avantageusement la jupe coopère avec une paroi intérieure de la partie d'extrémité du segment divergent fixe. La jupe est préférentiellement en matériau léger (comparativement à la masse de la tuyère déployable) et qui se fond ou se vaporise facilement sous l'effet des gaz chaud de combustion. Par exemple, la jupe est en mousse rigide et/ou présente une structure interne en nid d'abeille. Une telle jupe est par exemple fabriquée en mousse de polyuréthane ou en matériau composite en résine époxy pour les parois externes et en polypropylène pour la structure interne en nid d'abeille.

Selon un autre mode de réalisation, le raidisseur comprend au moins deux tirants s'étendant radialement depuis un corps central primaire, et l'extrémité aval du segment divergent fixe porte un corps central secondaire avec lequel le corps central primaire coopère par emboîtement en position reployée.

Dans cet autre mode de réalisation, on comprend que les moyens conjugués de centrages sont formés d'une part par le corps central primaire et d'autre part par le corps central secondaire. Par exemple, le corps central primaire et le corps central secondaire coopère par un emboitement du type tenon-mortaise.

Avantageusement, le segment divergent fixe comporte un raidisseur transversal précontraint en tension comprenant au moins deux tirants s'étendant radialement, au voisinage d'une extrémité aval du segment divergent fixe, entre au moins deux points de la périphérie d'une paroi intérieure du segment divergent fixe depuis le corps central secondaire.

Avec le raidisseur du segment divergent fixe permet de bloquer les premiers modes propres de vibration du segment divergent fixe, ce qui fiabilise d'autant plus la tuyère déployable.

Avantageusement, pour réduire la masse ajoutée par le(s) raidisseur(s), le corps central primaire et/ou le corps central secondaire est (sont) fabriqué(s) en matériau léger (comparativement à la masse de la tuyère déployable). Avantageusement, pour éviter d'éjecter des parties solides, le corps central primaire et/ou le corps central secondaire est (sont) fabriqué(s) en matériau qui se fond ou se vaporise facilement sous l'effet des gaz chaud de combustion. Par exemple, le corps primaire et/ou le corps secondaire est (sont) fabriqué(s) en fibres d'aramides ou en polyamide (ou nylon).

L'invention concerne également un moteur de fusée comprenant au moins une tuyère déployable selon l'invention.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :
- la figure 1 représente un premier mode de réalisation de la tuyère déployable selon l'invention en position reployée,
- la figure 2 représente la tuyère déployable de la figure 1 vue selon la direction axiale depuis la flèche II de la figure 1,
- la figure 3 représente la tuyère déployable de la figure 1 en position déployée,
- la figure 4 représente la tuyère déployable de la figure 1 équipée d'une jupe annulaire de centrage,
- la figure 5 représente un deuxième mode de réalisation de la tuyère déployable selon l'invention, vu partiellement,
- la figure 6 représente la tuyère déployable de la figure 5 vue selon la direction axiale depuis la flèche VI de la figure 5,
- la figure 7 représente une attache du raidisseur de la tuyère déployable de la figure 5, et
- la figure 8 représente un troisième mode de réalisation de la tuyère déployable selon l'invention, vu partiellement.

### DESCRIPTION DETAILLEE D'EXEMPLES DE REALISATION

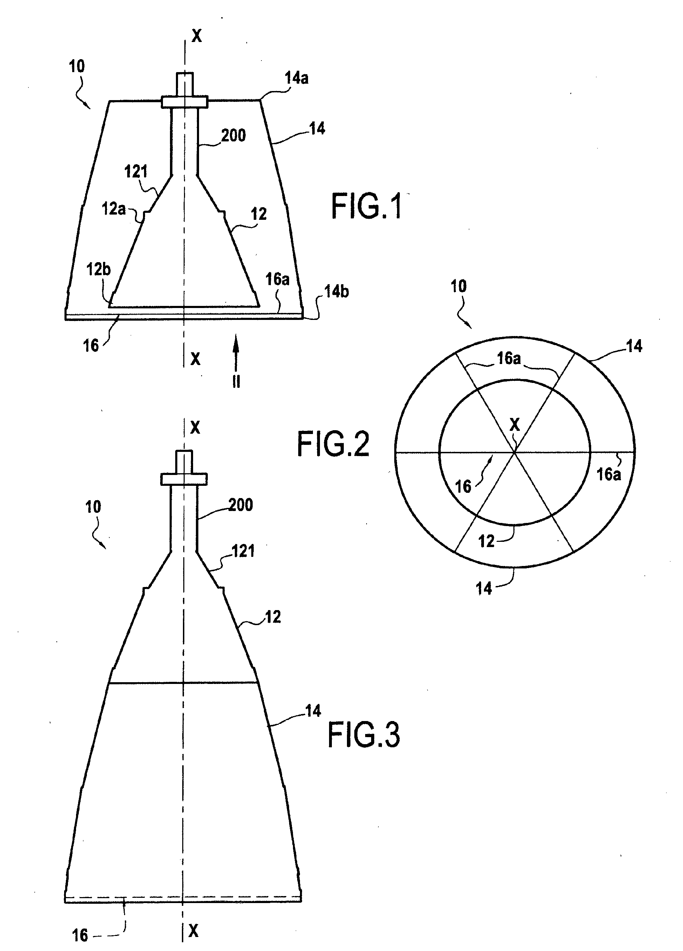

La figure 1 représente un premier mode de réalisation d'une tuyère déployable pour moteur de fusée selon l'invention, en position reployée. La tuyère déployable 10 comprend un segment divergent fixe 12 et un segment divergent mobile 14, et s'étend selon l'axe X (ou direction axiale X). Les segments divergents fixe et mobile présentent une forme tronconique d'axe X. Le segment divergent mobile 14 coulisse selon l'axe X coaxialement au segment divergent fixe 12. Le segment divergent fixe 12 présente une portion de raccord 121 fixée à une sortie d'une chambre propulsive 200 d'un moteur de fusée. Les gaz de combustion s'écoulent dans la tuyère déployable 10 depuis la chambre propulsive 200, via cette portion de raccord 121. Ainsi, l'extrémité amont 12a du segment divergent fixe 12 est disposée du côté de la portion de raccord 121 tandis que l'extrémité aval 12b du segment divergent fixe 12 est disposée du côté opposé. De la même manière, l'extrémité amont 14a du segment divergent mobile 14 est disposée du côté de la portion de raccord 121 tandis que l'extrémité aval 14b du segment divergent mobile est disposée du côté opposé.

Un raidisseur transversal 16 s'étend dans un plan transversal du segment divergent mobile 14 perpendiculaire à l'axe -X, au voisinage de son extrémité aval 14b. En référence à la figure 2, le raidisseur 16 comprend trois cordes 16a en fibres d'aramide s'étendant diamétralement et formant trois tirants. Les cordes 116a sont équidistantes angulairement. Ainsi, dans cet exemple, chaque corde est espacée de 60° (soixante degrés d'angle) des cordes adjacentes. Chaque corde 16a a deux extrémités, ces deux extrémités reliant deux points diamétralement opposés de la paroi intérieure du segment divergent mobile 14. Selon une variante, le raidisseur 16 peut comprendre une seule, deux ou plus de trois cordes 16a.

En référence à la figure 3, la tuyère déployable 10 est en position déployée, le moteur non représenté est en fonctionnement et le raidisseur 16, représenté en traits discontinus, a été fondu par les gaz chaud de combustion issus du moteur.

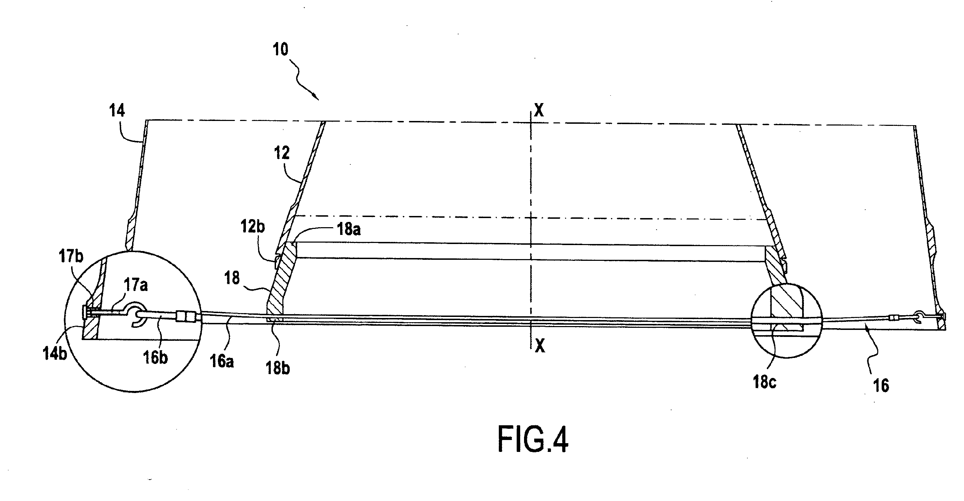

La figure 4 représente une variante, en position reployée, de la tuyère déployable de la figure 1 où le raidisseur 16 porte une jupe annulaire de centrage 18 monobloc en mousse rigide de polyuréthane. La jupe 18 s'étend axialement selon l'axe X est présente une forme tronconique. Le diamètre de l'extrémité amont 18a de la jupe 18 est inférieur au diamètre de l'extrémité aval 12b du segment divergent fixe 12 tandis que le diamètre de l'extrémité aval 18b de la jupe 18 est supérieur au diamètre de l'extrémité aval 12b du segment divergent fixe 12. Ainsi, la jupe 18 pénètre, selon son étendue axiale, partiellement à l'intérieur du segment divergent fixe 12 et sa paroi extérieure coopère en appui avec la paroi intérieure du segment divergent fixe 12. Le raidisseur 16 maintient la jupe 18 contre le segment divergent fixe 12. Comme représenté sur la figure 4, cet appui génère un fléchissement des cordes 16a. La jupe 18 est supportée par les cordes 16a. Pour ce faire, les cordes 16a traversent la jupe 18 dans son épaisseur via des trous 18c, les cordes 16a pouvant coulisser dans ces trous 18c.

La figure 4 représente une vue détaillée des attaches 17 des cordes 16a au segment divergent mobile 14. Les attaches 17 comprennent chacune un crochet 17a dont la base est filetée et visée à un écrou 17b présentant un épaulement qui coopère en appui avec la paroi extérieure du segment divergent mobile 14. Chaque extrémité des cordes 16a est fixée au crochet 17a via une boucle 16b. Grâce à l'écrou 17b, il est possible d'ajuster radialement la position du crochet 17a, et donc d'ajuster la tension sur la corde 16a. Grâce au crochet 17a d'une part et à l'écrou 17b d'autre part, l'attache 17 est solidaire du segment divergent mobile 14. Ainsi, les attaches 17 forment des moyens de fixation du raidisseur 16 au segment divergent mobile 14 tandis que les écrous 17b forment des moyens de réglage de la précontrainte en tension du raidisseur 16.

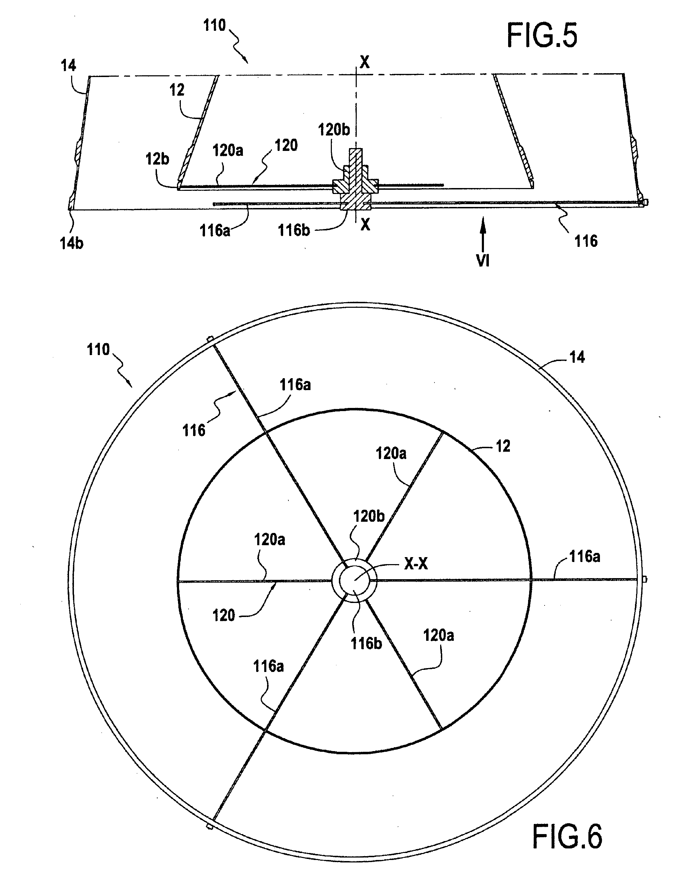

Les figures 5 et 6 représentent un deuxième mode de réalisation de la tuyère déployable selon l'invention, en position reployée. Les parties communes avec le premier mode de réalisation ne sont pas décrites de nouveau et conservent le même signe de référence.

La tuyère déployable 110 présente un premier raidisseur transversal 116 disposé au voisinage de l'extrémité aval 14b du segment divergent mobile 14 et un deuxième raidisseur transversal 120 disposé au voisinage de l'extrémité aval 12b du segment divergent fixe 12. Le premier raidisseur 116 s'étend dans un plan transversal, perpendiculaire à la direction axiale X, du segment divergent mobile 14 tandis que le deuxième raidisseur 120 s'étend dans un plan transversal, perpendiculaire à la direction axiale X, du segment divergent fixe 12. Le premier raidisseur 116 a trois cordes 116a en fibres d'aramide formant trois tirants radiaux. Chaque corde 116a présente deux extrémités, à savoir une première extrémité reliée à un corps central primaire 116b en fibres d'aramide et une deuxième extrémité reliée à un point de la périphérie de la paroi intérieure du segment divergent mobile 14. De même, le deuxième raidisseur 120 a trois cordes 120a en fibres d'aramide formant trois tirants radiaux. Chaque corde 120a présente deux extrémités, à savoir une première extrémité reliée à un corps central secondaire 120b en matériau synthétique rigide comme du nylon et une deuxième extrémité reliée à un point de la périphérie de la paroi intérieure du segment divergent fixe 12. Bien entendu, selon une variante, le premier et/ou le deuxième raidisseur a (ont) deux ou plus de trois cordes radiales. Les cordes 116a et 120a s'étendent selon des rayons géométriques respectivement des segments divergents mobile et fixe 14 et 12.

Le corps central primaire 116b est un corps à symétrie de révolution selon l'axe X, qui présente une tige en saillie axiale et une partie annulaire qui s'étend radialement à laquelle sont fixées les cordes 116a. Le corps central secondaire 120b est un corps à symétrie de révolution selon l'axe X, qui présente un trou central axial et une partie annulaire qui s'étend radialement à laquelle sont fixées les cordes 120a. La tige du corps central primaire 116b coopère par emboîtement avec le trou central du corps central secondaire 120b. Ainsi, lorsque la tuyère déployable est en position reployée, comme représente sur la figure 5, la tige du corps central primaire 116b est engagée dans le trou du corps central secondaire 120b. Lorsque la tuyère passe en position déployée, le mouvement de translation du segment divergent mobile 12 selon la direction X vers l'aval désengage la tige du corps central primaire 116b du trou du corps central secondaire 120b. Bien entendu, selon une variante la tige est disposée sur le corps central secondaire tandis que le trou est ménagé dans le corps central primaire. Selon encore une autre variante, plusieurs tiges peuvent s'engager respectivement dans plusieurs trous en position reployée

La figure 6 représente la répartition azimutale des cordes 116a et 120a des premier et deuxième raidisseurs 116 et 120. Les cordes sont régulièrement espacées de 120° (cent vingt degrés d'angle) chacune. Les cordes du deuxième raidisseur 120 sont décalées azimutalement de 60° (soixante degrés d'angle) par rapport aux cordes 116a du premier raidisseur. De manière plus générale, lorsque les premier et deuxième raidisseurs présentent un même nombre impair de cordes, les cordes du deuxième raidisseur sont décalées azimutalement de manière à s'étendre radialement à l'opposé des cordes du premier raidisseur.

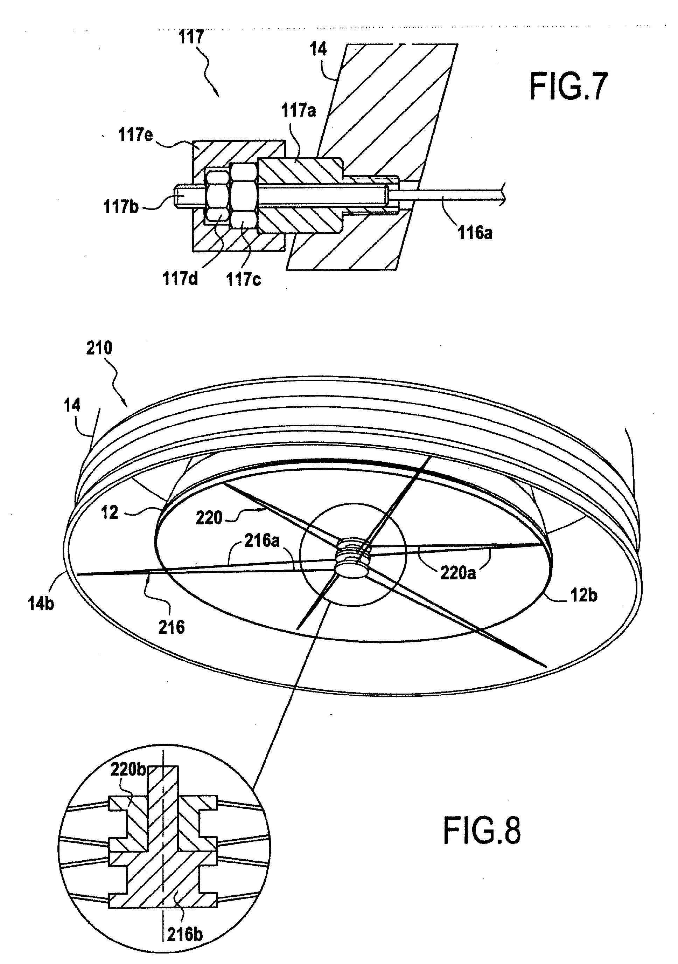

La figure 7 représente une attache 117 des cordes 116a au segment divergent mobile 14. Les attaches des cordes 120a au segment divergent fixe 12 sont identiques. L'attache 117 comprend un châssis 117a vissé sur le segment divergent mobile 14. L'attache 117 est donc solidaire du segment divergent mobile 14. Ce châssis 117a est tubulaire et est traversé par un embout 117b serti sur l'extrémité de la corde 116a. L'embout 117b peut coulisser dans le châssis 117a. Un écrou de réglage 117c vissé sur un filetage de l'embout 117b et coopère en appui avec le châssis 117a, ce qui permet d'une part de bloquer l'embout 117a en translation vers l'intérieur du segment divergent mobile 14, et d'autre part de régler la précontrainte en tension de la corde 116a. Un contre écrou 117d bloque l'écrou de réglage 117c. Un capuchon protecteur 117e protège les écrous 117c et d, notamment des infiltrations d'eau. Les attaches 117 forment des moyens de fixation du raidisseur au segment divergent mobile tandis que les écrous de réglage 117c forment des moyens de réglage de la précontrainte en tension.

Bien entendu, l'attache 117 du deuxième mode de réalisation peut être utilisée à la place de l'attache 17 du premier mode de réalisation et vice versa.

La figure 8 représente un troisième mode de réalisation de la tuyère déployable selon l'invention. Les parties communes avec le premier et le deuxième mode de réalisation ne sont pas décrites de nouveau et conservent le même signe de référence.

La tuyère déployable 210 présente un premier raidisseur transversal 216 disposé au voisinage de l'extrémité aval 14b du segment divergent mobile 14 et un deuxième raidisseur transversal 220 disposé au voisinage de l'extrémité aval 12b du segment divergent fixe 12. Le premier raidisseur 216 s'étend dans un plan transversal, perpendiculaire à la direction axiale X, du segment divergent mobile 14 tandis que le deuxième raidisseur 220 s'étend dans un plan transversal, perpendiculaire à la direction axiale X, du segment divergent fixe 12.

Afin de compenser l'espacement axial entre l'extrémité aval 12b du segment divergent fixe 12 et l'extrémité aval 14b du segment divergent mobile 14, chaque raidisseur comporte deux séries de cordes reliées à un corps central, chaque corde étant doublée. Ainsi, chaque corps central est déporté axialement par rapport aux plans définis par les points auxquels sont reliés les raidisseurs.

Chaque corps central présente deux parties annulaires s'étendant radialement qui sont espacées axialement, une première série de cordes étant reliée à une première partie annulaire tandis qu'une deuxième série de cordes, doublant la première série de cordes, est reliée à la seconde partie annulaire. On comprend donc que deux cordes s'étendent radialement depuis le corps central primaire 216b ou secondaire 220b, dans un même plan radial, vers un même point de la paroi intérieure du segment divergent mobile 14 ou fixe 12. Ainsi, chaque raidisseur 216 et 220 présente deux séries de trois cordes 216a et 220a, chaque corde d'une série doublant la corde de l'autre série. La répartition azimutale des cordes 216a et 220a est similaire à la répartition des cordes 116a et 120a du deuxième mode de réalisation telle que représentée sur la figure 6. Bien entendu selon une variante, les raidisseurs 216 et/ou 220 présente(nt) deux séries de deux ou de plus de trois cordes. Les cordes 216a et 220a sont respectivement rattachées au segment divergent mobile 14 et fixe 12 au moyen d'attache 17 (cf. fig. 4). Bien entendu, selon une variante, les attaches 117 (cf. fig. 7) remplacent les attaches 17.

De la même manière que pour le deuxième mode de réalisation, le corps central primaire 216b et le corps central secondaire 220b coopèrent par emboitement via une tige axiale et un trou central lorsque la tuyère déployable est en position reployée tandis que la tige se désengage du trou lorsque la tuyère déployable passe en position déployée.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés peuvent être combinées dans des modes de réalisation additionnels. Par conséquent, la description et les dessins doivent être considérés dans un sens illustratif plutôt que restrictif.

## Revendications

1. Tuyère déployable pour un moteur de fusée, comprenant au moins un segment divergent fixe (12) et un segment divergent mobile (14) coaxial au segment divergent fixe (12) et apte à se déplacer le long du segment divergent fixe (12) depuis une position reployée vers une position déployée, ladite tuyère déployable étant **caractérisée en ce qu'**elle comprend en outre un raidisseur transversal (16, 116, 216) précontraint en tension et s'étendant transversalement au segment divergent mobile (14), au voisinage d'une extrémité aval (14b) du segment divergent mobile (14), entre au moins deux points de la périphérie d'une paroi intérieure du segment divergent mobile (14).

2. Tuyère déployable selon la revendication 1, dans laquelle le raidisseur transversal (16, 116, 216) s'étend dans un plan transversal du segment divergent mobile (14).

3. Tuyère déployable selon la revendication 1 ou 2, dans laquelle le raidisseur (16) comprend au moins un tirant (16a) s'étendant diamétralement et ayant deux extrémités, chaque extrémité étant reliée à un point de la périphérie de la paroi intérieure du segment divergent mobile (14).

4. Tuyère déployable selon la revendication 1 ou 2, dans laquelle le raidisseur (116, 216) comprend au moins deux tirants (116a, 216a) s'étendant radialement depuis un corps central primaire (116b, 216b).

5. Tuyère déployable selon l'une quelconque des revendications 1 à 4, dans laquelle le raidisseur (16, 116, 216) comprend des moyens de réglage (17b, 117c) de la précontrainte en tension.

6. Tuyère déployable selon l'une quelconque des revendications 1 à 5, dans laquelle le raidisseur (16, 116, 216) comprend au moins une corde (16a, 116a, 216a) en fibres polymères.

7. Tuyère déployable selon l'une quelconque des revendications 1 à 6, dans laquelle le raidisseur (16, 116, 216) comprend des moyens de fixation (17, 117) au segment divergent mobile solidaires dudit segment divergent mobile.

8. Tuyère déployable selon l'une quelconque des revendications 1 à 7, dans laquelle, en position reployée, le raidisseur (16, 116, 216) coopère avec une partie d'extrémité aval du segment divergent fixe.

9. Tuyère déployable selon l'une quelconque des revendications 1 à 8, dans laquelle le segment divergent fixe (12) et le segment divergent mobile (14) présentent, au voisinage de leurs extrémités aval (12b, 14b), des moyens conjugués de centrage (18; 116b, 120b; 216b, 220b) qui coopèrent entre eux en position reployée.

10. Tuyère déployable selon la revendication 9, dans laquelle le raidisseur (16) porte une jupe annulaire de centrage (18) qui coopère par emboitement avec une partie d'extrémité aval du segment divergent fixe (12) dans la position reployée.

11. Tuyère déployable selon les revendications 4 et 9, dans laquelle l'extrémité aval (12b) du segment divergent fixe (12) porte un corps central secondaire (120b, 220b) avec lequel le corps central primaire (116b, 216b) coopère par emboitement en position reployée.

12. Tuyère déployable selon la revendication 11, dans lequel le segment divergent fixe (12) comporte un raidisseur transversal (120, 220) précontraint en tension comprenant au moins deux tirants (120a, 220a) s'étendant radialement, au voisinage d'une extrémité aval (12b) du segment divergent fixe (12), entre au moins deux points de la périphérie d'une paroi intérieure du segment divergent fixe (12) depuis le corps central secondaire (120b, 220b).

13. Moteur de fusée comprenant au moins une tuyère déployable (10, 110, 210) selon l'une quelconque des revendications 1 à 12.

## Patentansprüche

1. Entfaltbare Raketenmotordüse, umfassend mindestens ein festes divergentes Segment (12) und ein bewegliches divergentes Segment (14), das zu dem festen divergenten Segment (12) koaxial und geeignet ist, sich entlang des festen divergenten Segments (12) von einer gefalteten Position in eine entfaltete Position zu bewegen, wobei die entfaltbare Düse **dadurch gekennzeichnet** ist, dass sie ferner eine Querversteifung (16, 116, 216) umfasst, die vorgespannt ist und sich quer zum beweglichen divergenten Segmente (14) in der Nähe eines stromabwärtigen Endes (14b) des beweglichen divergenten Segments (14) zwischen mindestens zwei Punkten der Peripherie einer Innenwand des beweglichen divergenten Segments (14) erstreckt.

2. Entfaltbare Düse nach Anspruch 1, bei der sich die Querversteifung (16, 116, 216) in einer Querebene des beweglichen divergenten Segments (14) erstreckt.

3. Entfaltbare Düse nach Anspruch 1 oder 2, bei der die Versteifung (16) mindestens eine Zugstange (16a) umfasst, die sich diametral erstreckt und zwei Enden aufweist, wobei jedes Ende mit einem Punkt der Peripherie der Innenwand des beweglichen divergenten Segments (14) verbunden ist.

4. Entfaltbare Düse nach Anspruch 1 oder 2, bei der die Versteifung (116, 216) mindestens zwei Zugstangen (116a, 216a) umfasst, die sich radial von einem primären zentralen Körper (116b, 216b) aus erstrecken.

5. Entfaltbare Düse nach einem der Ansprüche 1 bis 4, bei der die Versteifung (16, 116, 216) Mittel (17b, 117c) zur Einstellung der Vorspannung umfasst.

6. Entfaltbare Düse nach einem der Ansprüche 1 bis 5, bei der die Versteifung (16, 116, 216) mindestens ein Seil (16a, 116a, 216a) aus Polymerfasern umfasst.

7. Entfaltbare Düse nach einem der Ansprüche 1 bis 6, bei der die Versteifung (16, 116, 216) Mittel (17, 117) zur Befestigung am beweglichen divergenten Segment umfasst, die mit dem beweglichen divergenten Segment verbunden sind.

8. Entfaltbare Düse nach einem der Ansprüche 1 bis 7, bei der in der gefalteten Position die Versteifung (16, 116, 216) mit einem stromabwärtigen Endteil des festen divergenten Segments zusammenwirkt.

9. Entfaltbare Düse nach einem der Ansprüche 1 bis 8, bei der das feste divergente Segment (12) und das bewegliche divergente Segment (14) in der Nähe ihrer stromabwärtigen Enden (12b, 14b) passende Zentriermittel (18; 116b, 120b; 216b, 220b) aufweisen, die in der gefalteten Position zusammenwirken.

10. Entfaltbare Düse nach Anspruch 9, bei der die Versteifung (16) eine ringförmige Zentrierschürze (18) trägt, die durch Einstecken mit einem stromabwärtigen Endteil des festen divergenten Segments (12) in der gefalteten Position zusammenwirkt.

11. Entfaltbare Düse nach den Ansprüchen 4 und 9, bei der das stromabwärtige Ende (12b) des festen divergenten Segments (12) einen sekundären zentralen Körper (120b, 220b) trägt, mit dem der primäre zentrale Körper (116b, 216b) durch Einstecken in der gefalteten Position zusammenwirkt.

12. Entfaltbare Düse nach Anspruch 11, bei der das feste divergente Segment (12) eine vorgespannte Querversteifung (120, 220) aufweist, umfassend mindestens zwei Zugstangen (120a, 220a), die sich radial in der Nähe eines stromabwärtigen Endes (12b) des festen divergenten Segments (12) zwischen mindestens zwei Punkten der Peripherie einer Innenwand des festen divergenten Segments (12) vom sekundären zentralen Körper (120b, 220b) aus erstrecken.

13. Raketenmotor, umfassend mindestens eine entfaltbare Düse (10, 110, 210) nach einem der Ansprüche 1 bis 12.

## Claims

1. A deployable nozzle for a rocket engine, the nozzle comprising at least a stationary divergent segment (12) and a movable divergent segment (14) that is coaxial about the stationary divergent segment (12) and suitable for moving along the stationary divergent segment (12) from a retracted position towards a deployed position, said deployable nozzle being **characterized in that** it further comprises a transverse stiffener (16, 116, 216) that is prestressed in tension and that extends transversely relative to the movable divergent segment (14) in the vicinity of a downstream end (14b) of the movable divergent segment (14) between at least two points at the periphery of an inside wall of the movable divergent segment (14).

2. A deployable nozzle according to claim 1, wherein the transverse stiffener (16, 116, 216) extends in a transverse plane of the movable divergent segment (14).

3. A deployable nozzle according to claim 1 or claim 2, wherein the stiffener (16) comprises at least one tie (16a) extending diametrically and having two ends, each end being connected to a point of the periphery of the inside wall of the movable divergent segment (14).

4. A deployable nozzle according to claim 1 or claim 2, wherein the stiffener (116, 216) comprises at least two ties (116a, 216a) extending radially from a primary central body (116b, 216b).

5. A deployable nozzle according to any one of claims 1 to 4, wherein the stiffener (16, 116, 216) comprises adjustment means (17b, 117c) for adjusting the prestress tension.

6. A deployable nozzle according to any one of claims 1 to 5, wherein the stiffener (16, 116, 216) comprises at least one cord (16a, 116a, 216a) made of polymer fibers.

7. A deployable nozzle according to any one of claims 1 to 6, wherein the stiffener (16, 116, 216) comprises fastener means (17, 117) for fastening to the movable divergent segment and secured to said movable divergent segment.

8. A deployable nozzle according to any one of claims 1 to 7, wherein, in the retracted position, the stiffener (16, 116, 216) cooperates with the downstream end portion of the stationary divergent segment.

9. A deployable nozzle according to any one of claims 1 to 8, wherein the stationary divergent segment (12) and the movable divergent segment (14) present, in the vicinity of their downstream ends (12b, 14b), complementary centering means (18; 116b, 120b; 216b, 220b) that cooperate with each other in the retracted position.

10. A deployable nozzle according to claim 9, wherein the stiffener (16) carries an annular centering skirt (18) that cooperates with a downstream end portion of the stationary divergent segment (12) in the retracted position by mutually engaging therewith.

11. A deployable nozzle according to claims 4 and 9, wherein the downstream end (12b) of the stationary divergent segment (12) carries a secondary central body (120b, 220b) with which the primary central body (116b, 216b) cooperates in the retracted position by mutual engagement therewith.

12. A deployable nozzle according to claim 11, wherein the stationary divergent segment (12) includes a transverse stiffener (120, 220) prestressed in tension comprising at least two ties (120a, 220a) extending radially in the vicinity of a downstream end (12b) of the stationary divergent segment (12), between at least two points of the periphery of an inside wall of the stationary divergent segment (12) from the secondary central body (120b, 220b).

13. A rocket engine including at least one deployable nozzle (10, 110, 210) according to any one of claims 1 to 12.
